Europäisches Patentamt

European Patent Office

Office européen des brevets

(19)

(11) EP 1 509 006 A1

(12) EUROPEAN PATENT APPLICATION

(43) Date of publication:
23.02.2005 Bulletin 2005/08

(51) Int Cl.$^7$: H04L 12/413, H04L 12/28

(21) Application number: 04255024.4

(22) Date of filing: 20.08.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(30) Priority: 21.08.2003 US 644823

(71) Applicant: Intel Corporation
Santa Clara, CA 95052-8119 (US)

(72) Inventors:
• Kondratiev, Vladimir
Haifa 34521 (IL)
• Ginzburg, Boris
Haifa 32812 (IL)

(74) Representative: Dunlop, Hugh Christopher et al
R G C Jenkins & Co.
26 Caxton Street
London SW1H 0RJ (GB)

(54) Method and apparatus to adapt a threshold for activating a data frame protection mechanism

(57) Briefly, a method and apparatus that may enable and/or disable of a packet protection mechanism based on a value of an adaptable threshold. The value of the adaptable threshold may be determined from a collision rate of packets transmitted over a wireless local area network and from detection of hidden nodes.

FIG. 4

EP 1 509 006 A1

**Description**

**BACKGROUND OF THE INVENTION**

In wireless local area networks (WLAN), network stations may use a channel access mechanism and a control mechanism to protect transportation of packets over the network. An example of an access mechanism may be a Carrier Sense Multiple Access with Collision Avoidance (CSMA/CA) and, more specifically, CSMA/CA with a binary exponential backoff method. A Request To Send/Clear To Send (RTS/CTS) mechanism is included in CSMA/CA mechanism and may be used to protect packet transportation.

For example, the activation of the RTS/CTS mechanism may be controlled by a predefined threshold, which may be referred as RTS threshold. The RTS/CTS mechanism may control packets by sending from a first station, (STA1) a RTS control message to a second station (STA2). Sending of RTS messages may be performed prior to transmission of an actual data frame, if desired. STA2 may respond with a CTS control message to STA1 and STA1 may respond by sending actual data to STA2. If STA1 does not receive the CTS message from STA2, STA1 may continue sending RTS messages to STA2 until the CTS message is received.

**BRIEF DESCRIPTION OF THE DRAWINGS**

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings in which:

FIG. 1 is a schematic illustration of a wireless communication system according to an exemplary embodiment of the present invention;

FIG. 2 is a block diagram of a station according to some exemplary embodiments of the present invention;

FIG. 3 is a block diagram of an access point according to exemplary embodiments of the present invention; and

FIG. 4 is a flowchart of a wireless communication method according to some exemplary embodiments of the present invention.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

**DETAILED DESCRIPTION OF EMBODIMENTS OF THE INVENTION**

In the following detailed description, numerous specific details are set forth in order to provide a thorough understanding of the invention. However it will be understood by those of ordinary skill in the art that the present invention may be practiced without these specific details. In other instances, well-known methods, procedures, components and circuits have not been described in detail so as not to obscure the present invention.

Some portions of the detailed description, which follow, are presented in terms of algorithms and symbolic representations of operations on data bits or binary digital signals within a computer memory. These algorithmic descriptions and representations may be the techniques used by those skilled in the data processing arts to convey the substance of their work to others skilled in the art.

Unless specifically stated otherwise, as apparent from the following discussions, it is appreciated that throughout the specification discussions utilizing terms such as "processing," "computing," "calculating," "determining," or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

It should be understood that the present invention may be used in a variety of applications. Although the present invention is not limited in this respect, the circuits and techniques disclosed herein may be used in many apparatuses such as stations of a radio system. Stations intended to be included within the scope of the present invention include, by way of example only, wireless local area network (WLAN) stations, two-way radio stations, digital system stations, analog system stations, cellular radiotelephone stations, and the like.

Types of WLAN stations intended to be within the scope of the present invention include, although are not limited to, mobile stations, access points, stations for receiving and transmitting spread spectrum signals such as, for example, Frequency Hopping Spread Spectrum (FHSS), Direct Sequence Spread Spectrum (DSSS), Complementary Code Keying (CCK), Orthogonal Frequency-Division Multiplexing (OFDM) and the like.

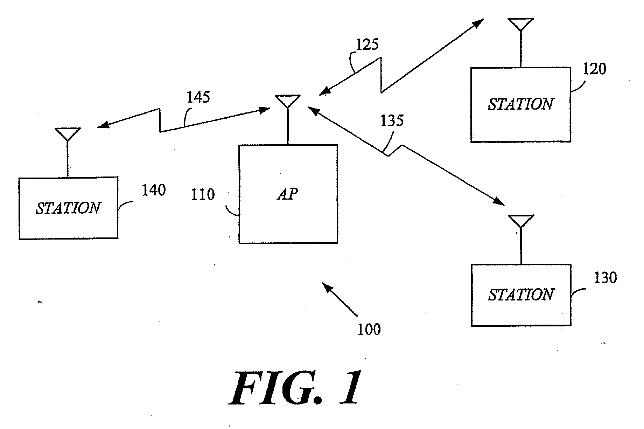

Turning first to FIG. 1, a wireless communication system 100, for example, a WLAN communication system is shown. Although the scope of the present invention is not limited in this respect, the exemplary WLAN communication system 100 may be defined, by IEEE 802.11 -1999 standard, as a basic service set (BSS). For example, BSS may include at least one communication station, for example, an access point (AP) 110, and stations 120 130, at least one of which may be a mobile unit (MU). In some embodiments, stations 130 and 120 may transmit and/or receive one or more packets over wireless communication system 100. The packets may include data, control messages, network information, and the like. Additionally or alternatively, in other embodiments of the present invention, wireless communication system 100 may include two or more APs and two or more mobile stations. This arrangement of wireless communication system 100 may be referred by IEEE 802.11 -1999 standard as extended service set (ESS), although the scope of the present invention is not limited in this respect.

Although the scope of the present invention is not limited in this respect, AP 110 may control the communication by sending control commands of a packet protection mechanism via beacons 125, 135, 145, if desired. For example, a packet protection mechanism such as, for example, a CSMA/CA with binary exponential backoff may include a RTS/CTS mechanism that may be used to provide collision protection to the transmission of a data frame, if desired.

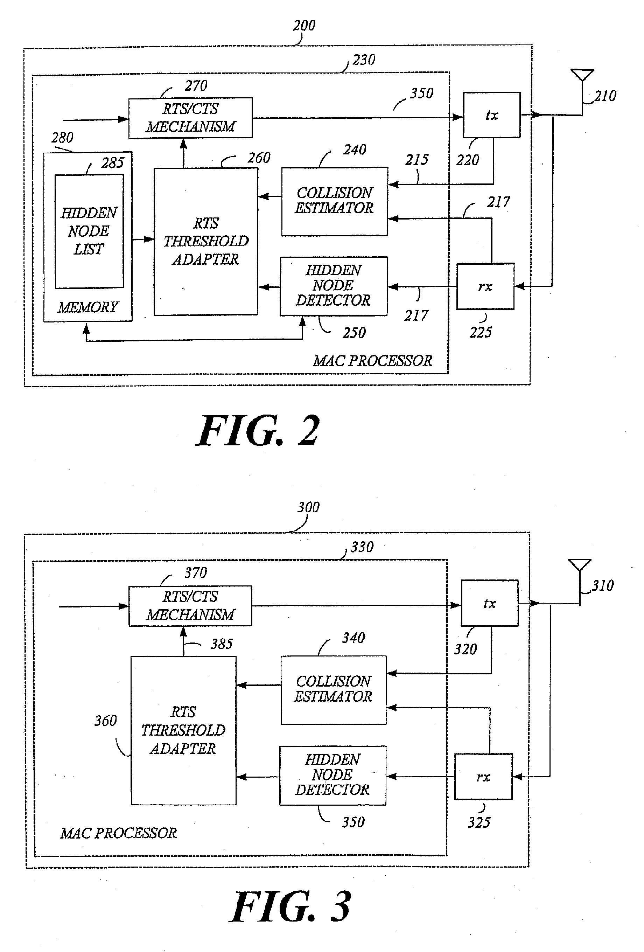

Turning to FIG. 2, a block diagram of a station 200 according to some exemplary embodiments of the present invention is shown. Although the scope of the present invention is not limited in this respect, station 200 may include an antenna 210, a transmitter (TX) 220, a receiver (RX) 225 and a medium access control (MAC) processor 230. In some embodiments of the invention, MAC processor 230 may include a collision estimator 240, a hidden node detector 250, an RTS threshold adapter 260, an RTS/CTS mechanism 270 and a memory 280.

Although the scope of the present invention is not limited in this respect, antenna 210 may be an omni-directional antenna, a monopole antenna, a dipole antenna, an end fed antenna, a circularly polarized antenna, a microstrip antenna, a diversity antenna and the like. MAC processor 230 may include a digital signal processor, a communication processor, and the like.

Although the scope of the present invention is not limited in this respect, station 200 may include TX 220 and RX 225 to transmit and receive signals, respectively. If a packet 215 is received successfully, and at least a portion of the information in a received packet 217, for example, the information on channel load, if desired, may be input to collision estimator 240. In some embodiments of the invention, RTS/CTS mechanism may be used to overcome an increase in collision rate due to "a hidden node", for example, a station 140, which may be referred to herein as "hidden station. Turning back to FIG. 1, for example, stations 120, 130 and AP 110 may be referred to as "visible stations" because they may receive all transmissions from other stations. However, a hidden station, for example, station 140 may receive transmissions of one station, for example, AP 110 and may not received transmissions from other stations, e.g., stations 120 and 130.

Although the scope of the present invention is not limited in this respect, RTS\CTS mechanism 270 may be used to control the data frame transportation if for example, according to the value of a collision rate parameter, a possible hidden station, e.g., station 140, is determined to be within the wireless communication system 100. Hidden node detector 250 may detect the hidden station by monitoring the frames from the BSS stations. For example, hidden node detector 250 may detect the hidden station if a CTS message from AP 110 is received but the corresponding RTS message from station 120 is not received, and the channel is sensed as clear before the CTS message is received. Additionally or alternatively, hidden node detector 250 may detect a hidden station if an acknowledgement message from AP 110 to station 140 is received but the corresponding packet from station 120 is not received and the channel is sensed as clear before the acknowledgement message is received.

Although the scope of the present invention is not limited in this respect, hidden node decoder 250 may store in memory 280 the detected hidden station and may enable a hidden node protection. For example, in some embodiments of the invention, hidden node detector 250 may adapt a RTS threshold by sending a RTS threshold value to RTS threshold adapter 260. RTS/CTS mechanism 270 may be enabled and/or disabled according to the value of the RTS threshold. RTS/CTS mechanism 270 may protect the packet from collisions and from an increase in the network load. In some embodiments of the invention, memory 280 may include a list of hidden node stations 285. Hidden node detector 250 may add or remove stations from hidden node list 285, for example, when a visible station becomes hidden or when a hidden station becomes visible, if desired. In some embodiments when hidden node list 285 become empty, hidden node detector 250 may command RTS threshold adapter to adapt the RTS threshold value. The adaptation of the RTS threshold value may cause RTS/CTS mechanism 270 to disable the hidden node protection, if desired.

Turning to FIG. 3 a block diagram of an AP 300 according to some exemplary embodiments of the present invention is shown. Although the scope of the present invention is not limited in this respect, AP 300 may include at least one antenna 310 that may be used to transmit and/or receive data packets over wireless communication system 100 (FIG. 1), for example, WLAN. In embodiments of the invention, antenna 310 may be an omni-directional antenna, a monopole antenna, a dipole antenna, an end fed antenna, a circularly polarized antenna, a microstrip antenna, a diversity antenna and the like.

Although the scope of the present invention is not limited in this respect, AP 300 may include a transmitter (TX) 320, a receiver (RX) 325 and a MAC processor 330. TX 320 and RX 325 may be used to transmit and/or received packets over the air. Some of the packets may be included in a control signal, e.g., beacon 125. Beacon 125 may include data, control messages, network parameters such as, for example, a collision rate parameter, and the like. In some embodiments, MAC processor 330 may include a RTS/CTS mechanism 370 that may be enabled and/or disabled based on a value of an adaptable RTS threshold 385. A RTS threshold adapter 360 may adapt the value of RTS threshold 385 based on a packets collision rate. Although the scope of the present invention is not limited in this respect, RTS\CTS mechanism 370 may be enabled or disabled by comparing the value of adaptable threshold 385 to the length of the packet. For example, RTS/CTS mechanism 370 may be enabled if the length of the packet is below the adaptable threshold 385 and/or the RTS/CTS mechanism may be disabled if the length of the packet is above adaptable threshold 385.

Although the scope of the present invention is not limited in this respect, threshold adapter 360 may be included in MAC processor 330. Threshold adapter 360 may calculate the value of adaptable threshold 385 based on a collision rate parameter received from a control signal, for example, from beacon 125, if desired. Furthermore, in some embodiments, threshold adaptor 360 may calculate the value of adaptable threshold 385 based on an average collision rate, a transmission data rate and a control message packet length.

In some embodiments of the invention, MAC processor 330 may include a collision estimator 340 to estimate the average collision rate from the received collision rate parameter, and a hidden node detector 350 to detect a hidden station and by to enable the RTS/CTS mechanism 370. In this embodiment, hidden node detector 350 may receive a collision rate parameter from RX 325 and may enable the RTS/CTS the transmission 370 by reducing the value of RTS threshold 385, if desired.

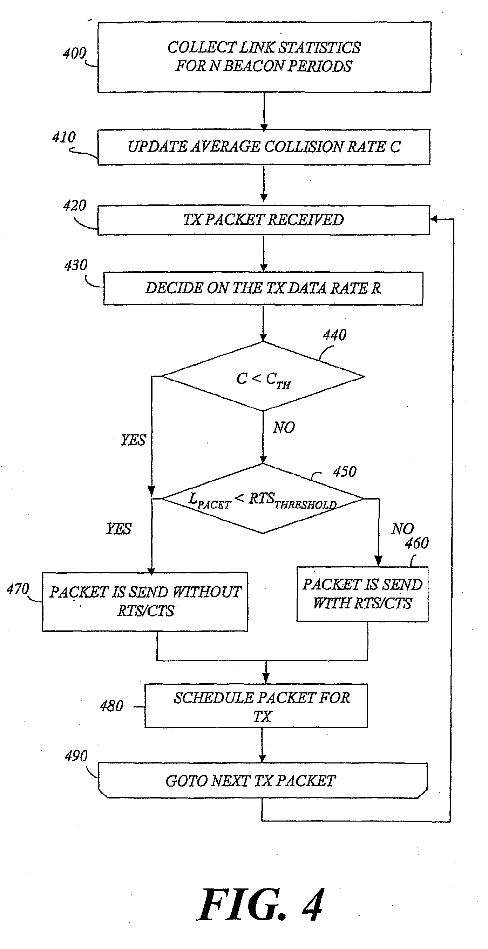

Turning to FIG. 4 a flowchart of a method to adapt a threshold to select a packet control mechanism according to some exemplary embodiments of the present invention is shown. Although the scope of the present invention is not limited in this respect, the exemplary method may adapt an $RTS_{threshold}$ according to a collision rate in a BSS of a WLAN. In some embodiments of the present invention, the adaptation of $RTS_{threshold}$ may be performed according to the following equation:

$$RTS_{threshold} = T_{phy} \frac{1-c}{c} * r + \frac{L_{rts}}{c} \qquad \text{(Equation 1)}$$

wherein

$T_{phy}$ may be the physical layer (PHY) overhead (in seconds (sec));
$L_{RTS}$ may be the RTS packet length (in bits);
$r$ may be the current data rate (in bit/sec); and
$c$ may be the current collision rate.

Although the scope of the present invention is not limited in this respect, use of the RTS/CTS mechanism may be controlled through the $RTS_{threshold}$. For example, if the packet length is greater than the $RTS_{threshold}$, then the RTS frame may be sent prior to the data, if desired. Let $P$ be the transmission power, $T_{RTS}$ the length of the RTS packet, $T_{data}$ the length of data packet, and c the collision rate ($0 \leq c \leq 1$), in some embodiments, the power required to send a data packet with the RTS/CTS mechanism may be estimated using the following equation:

$$E_{RTS} = P \cdot \left( \frac{T_{RTS}}{1-c} + T_{data} \right) \qquad \text{(Equation 2)}$$

The power required to send a data packet without the RTS/CTS mechanism may be estimated using the following equation:

$$E_{noRTS} = P \frac{T_{data}}{1-c} \qquad \text{(Equation 3)}$$

Although the scope of the present invention is not limited in this respect, using the estimations of Equations 2 and 3, a condition for using RTS may be $E_{RTS} < E_{noRTS.}$, which condition may be represented as follows:

$$T_{data} > \frac{T_{RTS}}{c} \qquad \text{(Equation 4)}.$$

In some embodiments of the invention, an air time $T$ for a packet of length $L$, which may be sent at a data rate $r$, may be calculated as follows:

$$T = T_{PHY} + \frac{L}{r} \qquad \text{(Equation 5)}$$

wherein $T_{phy}$ may be a PHY overhead time.

Although the scope of the present invention is not limited in this respect, AP 110 may receive from beacon 125 a collision rate parameter. AP 110 may collect statistics of the collision rate parameter for $N$ beacon (e.g. beacon 125) periods, wherein $N$ may be any suitable number (box 400). AP 110 may calculate based on the statistic the average collision rate $c$ (box 410). In some embodiment of the invention, AP 110 may determine the transmission rate of the transmitted packet (boxes 420, 430). AP 110 may compare the average collision rate c with a collision rate threshold $C_{threshold}$ (decision box 440). For example, $C_{threshold}$ may be defined as follows:

$$C_{threshold} = \frac{L_{rts}}{L_{max}} \qquad \text{(Equation 6)}$$

wherein, $L_{max}$ may represent a maximum data packet length.

Although the scope of the present invention is not limited in this respect, if the average collision parameter $c$ is below $C_{threshold}$ then AP 110 may transmit the packet with a predetermined packet control mechanism other than the RTS/CTS mechanism, for example, CSMA/CA control mechanism 355 (box 470). If $c$ is above $C_{threshold}$ then the length of the transmitted packet, $L_{packet}$, may be compared to $RTS_{threshold}$ (decision box 450).

Although the scope of the present invention is not limited in this respect, if the length of the transmitted packet $L_{packet}$ is below RTS threshold, $RTS_{threshold}$, then AP 110 may transmit the packet with a predetermined packet control mechanism other than the RTS/CTS mechanism, for example, CSMA/CA control mechanism 355 (box 470). If the length of the transmitted packet, $L_{packet}$, is above the RTS threshold, $RTS_{threshold}$, then AP 110 may transmit the packet with the RTS/CTS control mechanism (box 460)

Although the scope of the present invention is not limited in this respect, it can be seen from equation 1 that $RTS_{threshold}$ may be adapted before transmitting a packet because the average packet collision parameter c may be adjusted before transmission of the packet. In box 480, AP 110 may schedule a new packet for transmission and may be initialized for transmission of the new packet (box 490). Although the scope of the present invention is not limited in this respect, the method of enabling and/or disabling the packet protection control mechanism by adapting the RTS$_{threshold}$ based on the average collision parameter c may be repeated for a packet transmission.

While certain features of the invention have been illustrated and described herein, many modifications, substitutions, changes, and equivalents will now occur to those skilled in the art. It is, therefore, to be understood that the appended claims are intended to cover all such modifications and changes as fall within the true spirit of the invention.

**Claims**

1. A method comprising:

   enabling a packet protection mechanism based on a value of an adaptable request to send a threshold, wherein the value of the adaptable request is determined according to a collision rate of packets transmitted over a wireless local area network.

2. The method of claim 1 comprising:

   adapting the adaptable threshold based on a collision rate parameter received from a control signal.

3. The method of claim 2, wherein adapting comprises:

   calculating an average collision rate from the received collision rate parameter;

determining a transmission data rate and a control message packet length; and
adapting the adaptable threshold based on the average collision rate, the transmission data rate and the control message packet length.

**4.** The method of claim 1, wherein enabling the packet protection mechanism comprises:

enabling a request to send\clear to send (RTS\CTS) control mechanism if the length of the packet is below the adaptable threshold.

**5.** The method of claim 1, wherein enabling the packet protection mechanism comprises:

enabling a request to send\clear to send (RTS\CTS) control mechanism if the collision rate parameter is to indicate a possible hidden station.

**6.** The method of claim 5, further comprising:

detecting a hidden station based on reception at a visible station of one control messages without another control message of the request to send\clear to send (RTS\CTS) control mechanism or reception of acknowledgment frames.

**7.** The method of claim 6, further comprising:

adding the detected hidden station to a list.

**8.** The method of claim 7, comprising:

removing the hidden station from the list when both control messages of the request to send\clear to send (RTS\CTS) control mechanism from the hidden station are received at the visible station.

**9.** The method of claim 7, comprising:

disabling the request to send\clear to send (RTS\CTS) control mechanism by adapting the value of an adaptable request to send a threshold if the list is empty.

**10.** An apparatus comprising:

a threshold adapter to enable and/or disable a packet protection mechanism based on a value of an adaptable threshold, wherein the value of the adaptable threshold is determined from a collision rate of packets transmitted over a wireless local area network.

**11.** The apparatus of claim 10, wherein the threshold adapter is able to adapt the adaptable threshold based on a collision rate parameter received from a control signal.

**12.** The apparatus of claim 10, comprising:

a collision estimator to calculate an average collision rate from the received collision rate parameter.

**13.** The apparatus of claim 12 wherein the threshold adaptor is able to adapt the adaptable threshold based on the average collision rate, a transmission data rate and a control message packet length.

**14.** The apparatus of claim 10, wherein the threshold adapter is able to enable a request to send\clear to send (RTS\CTS) control mechanism if the length of the packet is below the adaptable threshold.

**15.** The apparatus of claim 10, wherein the threshold adapter is able to enable a request to send\clear to send (RTS\CTS) control mechanism if, according to the collision rate parameter, there is a possible hidden station within the wireless local area network.

**16.** The apparatus of claim 10 comprising:

a hidden node detector to detect a hidden station based on reception at a visible station one control message without another control message of the request to send\clear to send (RTS\CTS) control mechanism; and a memory to store the detected hidden station in a list of hidden stations.

**17.** An apparatus comprising:

a dipole antenna to receive a control signal having data of a collision rate of packets transmitted over a wireless local area network; and
a threshold adapter to enable and/or disable a packet protection mechanism based on a value of an adaptable threshold, wherein the value of the adaptable threshold is determined from the collision rate.

**18.** The apparatus of claim 17, wherein the threshold adapter is able to adapt the adaptable threshold based on a collision rate parameter received from a control signal.

**19.** The apparatus of claim 17, comprising:

a collision estimator to calculate an average collision rate from the received collision rate parameter.

**20.** The apparatus of claim 18, wherein the threshold adaptor is able to adapt the adaptable threshold based on the average collision rate, a transmission data rate and a control message packet length.

**21.** The apparatus of claim 17, wherein the threshold adapter is able to enable a request to send\clear to send (RTS\CTS) control mechanism if the length of the packet is below the adaptable threshold.

**22.** The apparatus of claim 17, wherein the threshold adapter is able to enable a request to send\clear to send (RTS\CTS) control mechanism if, according to the collision rate parameter, there is a possible hidden station within the wireless local area network.

**23.** The apparatus of claim 17 comprising:

a hidden node detector to detect a hidden station based on reception at a visible station one control message without another control message of the request to send\clear to send (RTS\CTS) control mechanism; and
a memory to store the detected hidden station in a list of hidden stations.

**24.** A wireless communication system comprising:

a station to transmit and receive a packet over the wireless communication system; and
an access point includes a threshold adapter to enable and/or disable a packet protection mechanism based on a value of an adaptable threshold, wherein the value of the adaptable threshold is determined from a collision rate of packets transmitted over the wireless communication system.

**25.** The wireless communication system of claim 24, wherein the threshold adapter is able to adapt the adaptable threshold based on the collision rate parameter received from a control signal.

**26.** The wireless communication system of claim 24, wherein the access point comprises:

a collision estimator to calculate an average collision rate from the received collision rate parameter.

**27.** The wireless communication system of claim 26, wherein the collision estimator is able to estimate a network load base on the packet time parameter and the collision probability parameter and to estimate the throughput loss parameter based on the network load.

**28.** The wireless communication system of claim 24 further comprising:

a hidden node detector to detect a hidden station based on reception at a visible station one control message without another control message of the request to send\clear to send (RTS\CTS) control mechanism; and
a memory to store the detected hidden station in a list of hidden stations.

**29.** An article comprising: a storage medium, having stored thereon instructions, that when executed, result in:

enabling a packet protection mechanism based on a value of an adaptable request to send a threshold, wherein the value of the adaptable request is determined according to a collision rate of packets transmitted over a wireless local area network.

**30.** The article of claim 29 wherein the instructions when executed, result in:

calculating the probability of collisions based on estimated throughput loss parameter which based on the collisions.

**31.** The article of claim 29 wherein the instructions when executed, result in:

adapting the adaptable threshold based on a collision rate parameter received from a control signal.

**32.** The article of claim 29 wherein the instruction when executed, result in:

calculating an average collision rate from the received collision rate parameter;
determining a transmission data rate and a control message packet length; and
adapting the adaptable threshold based on the average collision rate, the transmission data rate and the control message packet length.

**33.** The article of claim 29 wherein the instruction determining the packet protection mechanism, result in:

enabling a request to send\clear to send (RTS\CTS) control mechanism if the length of the packet is below the adaptable threshold.

**34.** The article of claim 29 wherein the instruction when executed, result in:

detecting a hidden station base on reception at a visible station of one control messages without another control message of the request to send\clear to send (RTS\CTS) control mechanism or reception of acknowledgment frames.

**FIG. 1**

**FIG. 2**

**FIG. 3**

400 — COLLECT LINK STATISTICS FOR N BEACON PERIODS

410 — UPDATE AVERAGE COLLISION RATE C

420 — TX PACKET RECEIVED

430 — DECIDE ON THE TX DATA RATE R

440 — $C < C_{TH}$

YES

NO

450 — $L_{PACET} < RTS_{THRESHOLD}$

YES

NO

470 — PACKET IS SEND WITHOUT RTS/CTS

460 — PACKET IS SEND WITH RTS/CTS

480 — SCHEDULE PACKET FOR TX

490 — GOTO NEXT TX PACKET

## FIG. 4

# EP 1 509 006 A1

**European Patent Office**

## EUROPEAN SEARCH REPORT

Application Number

EP 04 25 5024

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 872 979 A (ADVANCED MICRO DEVICES INC) 21 October 1998 (1998-10-21) | 1,2,4, 10-12, 14, 17-19, 21, 24-26, 29,31,33 | H04L12/413 H04L12/28 |
| Y | * column 3, lines 5-25 *<br><br>* column 4, line 50 - column 6, line 30 *<br>* column 8, line 50 - column 15, line 34 *<br>* figures 4-7 *<br>----- | 5-9,15, 16,22, 23,28,34 | |
| Y | US 5 661 727 A (KERMANI PARVIZ ET AL) 26 August 1997 (1997-08-26)<br><br>* column 2, line 28 - column 4, line 35 *<br>----- | 5-9,15, 16,22, 23,28,34 | |
| X | SHAOHU YAN ET AL: "An adaptive RTS threshold adjust algorithm based on minimum energy consumption in IEEE 802.11 DCF"<br>PROCEEDINGS OF ICCT2003,<br>vol. 2, 9 April 2003 (2003-04-09), pages 1210-1214, XP010644069<br>Chapters I-IV<br>----- | 1,10,17, 24,29 | **TECHNICAL FIELDS SEARCHED** (Int.Cl.7)<br><br>H04L |
| A | BIANCHI G: "PERFORMANCE ANALYSIS OF THE IEEE 802.11 DISTRIBUTED COORDINATION FUNCTION"<br>IEEE JOURNAL ON SELECTED AREAS IN COMMUNICATIONS, IEEE INC. NEW YORK, US,<br>vol. 18, no. 3, March 2000 (2000-03),<br>pages 535-547, XP000947377<br>ISSN: 0733-8716<br>Chapters I, II<br>-----<br>-/-- | 1-34 | |

The present search report has been drawn up for all claims

| Place of search | Date of completion of the search | Examiner |
|---|---|---|
| Munich | 18 October 2004 | Kreppel, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

12

**European Patent Office**

## EUROPEAN SEARCH REPORT

Application Number

EP 04 25 5024

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | US 2002/071448 A1 (CERVELLO GERARD ET AL) 13 June 2002 (2002-06-13) * paragraphs [0033] - [0046] * ----- | 1-34 | |
| | | | **TECHNICAL FIELDS SEARCHED** (Int.Cl.7) |

The present search report has been drawn up for all claims

| Place of search | Date of completion of the search | Examiner |
|---|---|---|
| Munich | 18 October 2004 | Kreppel, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

**ANNEX TO THE EUROPEAN SEARCH REPORT
ON EUROPEAN PATENT APPLICATION NO.**

EP 04 25 5024

This annex lists the patent family members relating to the patent documents cited in the above-mentioned European search report.
The members are as contained in the European Patent Office EDP file on
The European Patent Office is in no way liable for these particulars which are merely given for the purpose of information.

18-10-2004

| Patent document cited in search report | | Publication date | Patent family member(s) | | Publication date |
|---|---|---|---|---|---|
| EP 0872979 | A | 21-10-1998 | US | 5889772 A | 30-03-1999 |
| | | | EP | 0872979 A2 | 21-10-1998 |
| | | | JP | 10303930 A | 13-11-1998 |
| US 5661727 | A | 26-08-1997 | GB | 2314242 A ,B | 17-12-1997 |
| | | | JP | 3155492 B2 | 09-04-2001 |
| | | | JP | 10065669 A | 06-03-1998 |
| | | | KR | 270641 B1 | 01-11-2000 |
| US 2002071448 | A1 | 13-06-2002 | NONE | | |

EPO FORM P0459

For more details about this annex : see Official Journal of the European Patent Office, No. 12/82